(19) Europäisches Patentamt
European Patent Office
Office européen des brevets

(11) EP 1 153 905 B1

(12) EUROPEAN PATENT SPECIFICATION

(45) Date of publication and mention of the grant of the patent:
**04.08.2004 Bulletin 2004/32**

(21) Application number: **00902020.7**

(22) Date of filing: **31.01.2000**

(51) Int Cl.[7]: **C07C 17/02**, C07C 19/00, C08F 4/603, C08F 4/70, C08G 85/00, C07F 5/02 // (C07F5/02, 15:02, C08G59:68)

(86) International application number:
**PCT/JP2000/000518**

(87) International publication number:
**WO 2000/046171 (10.08.2000 Gazette 2000/32)**

(54) **NOVEL CRYSTALLINE ION-ASSOCIATION SUBSTANCE, PROCESS FOR PRODUCING THE SAME, AND POLYMERIZATION INITIATOR**

NEUARTIGE KRISTALLINE IONEN-ASSOZIIERTE SUBSTANZ, EIN VERFAHREN ZUR HERSTELLUNG UND EIN POLYMERISATIONS-INITIATOR

NOUVELLE SUBSTANCE CRISTALLINE D'IONS ASSOCIES, SON PROCEDE DE PRODUCTION, ET INITIATEUR DE POLYMERISATION

(84) Designated Contracting States:
**AT BE CH CY DE DK ES FI FR GB GR IE IT LI LU MC NL PT SE**

(30) Priority: **01.02.1999 JP 2429499**

(43) Date of publication of application:
**14.11.2001 Bulletin 2001/46**

(73) Proprietor: **AUTEX, INC.**
**Shinjuku-ku, Tokyo 162-0067 (JP)**

(72) Inventor: **HIWASA, Shin**
**Inashiki-gun, Ibaraki 300-1424 (JP)**

(74) Representative: **De Gregori, Antonella**
**Ing. Barzano & Zanardo Milano S.p.A.**
**Via Borgonuovo 10**
**20121 Milano (IT)**

(56) References cited:
**EP-A- 1 006 119**
**US-A- 5 521 265**
**US-A- 5 959 132**

- **DATABASE WPI Section Ch, Week 198113 Derwent Publications Ltd., London, GB; Class E12, AN 1981-22920D XP002193094 & SU 748 221 A (ZHDANOV UNIV), 18 July 1980 (1980-07-18)**
- **KLIMOVA, ELENA I. ET. AL.: 'Mutual Z-/E-isomerization of ferroccenylmethylene- and arylidene-substituted carbo- and heterocycles.' L- ORGANOMET. CHEM. vol. 559, no. 1-2, 1998, pages 43 - 53, XP002928249**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 153 905 B1

## Description

### Technical Field

The present invention relates to a novel crystalline ion-association substance, process for producing the same, and a polymerization initiator for cationically polymerizable organic substances which comprises said crystalline ion-association substance.

### Background of the Invention

As the cationically polymerizable organic substances, many compounds have been well known such as methylol compounds, ethylene compounds, polyacetal compounds, organosiloxane compounds, polyamide compounds, heterocyclic compounds, etc.

High molecular products produced by hardening (or polymerizing) the above-mentioned compounds have various uses, especially epoxy resin and silicone resin have been widely used as adhesives, sealing, and paints in various fields such as automobile industry, housing/building material industry, civil engineering and construction industries, aircraft industry, and electric and electronic industries.

Cationic polymerization of epoxy compound or organosiloxane compound, which is a means for producing epoxy resin or silicone resin, is carried out in the presence of polymerization catalyst or polymerization initiator.

It has been well known that the polymerization is generally carried out at room temperature or under heating condition. Recently, the searches on photopolymerization catalyst or initiator have been conducted, because it may be preferable to carry out the polymerization under irradiation condition dependently upon use. However, any remarkable result has not been obtained.

Regarding photopolymerization of epoxy compound, the example of initiator for cationic photopolymerizatioin is onium salt which contains element having lone pair to which proton or other cation compound is bonded via coordinate bond. Typical example of the onium salt is aromatic diazonium salt, aromatic iodonium salt, and aromatic sulfonium salt. Many of the onium salts contain halogen metal complex anion ($BF_4^-$, $PF_6^-$, $AsF_6^-$, $SbF_6^-$, etc.) as counter ion.

The working mechanism of these conventional photopolymerization initiators such as diazonium salt, iodium salt, and sulfonium salt is as follows: At first, Brønsted acid is produced by U.V. light irradiation. Then, the produced Brønsted acid reacts with the cationically polymerizable organic substances and molecular chain of polymer grows.

Another example of photopolymerization initiator is salt of metallocene complex. In this case, Lewis acid is produced as active species by U.V. light irradiation, and insertion of monomer occurs at the Lewis acid, whereby molecular chain of polymer grows.

Photopolymerization initiator containing borate counter anion has been disclosed in Japanese Patent Laid-open Nos. 143,044/87 and 182,701/90. In accordance with these literatures, the working mechanism is as follows: When dyestuff which is cation component of the complex is exposed to U.V. light, it is excited to singlet state; it receives electron from the borate salt which is anion component; then the produced borate radical dissociates one of the ligands to generate a radical, whereby the radical polymerization proceeds.

As other example, the photopolymerization initiator disclosed in Japanese Patent Publication No. 62692/94 of the same applicant as this application can be cited. This potopolymerization initiator comprises a composite obtainable from a reaction between (a) charge transfer complex consisting of biscyclopentadienyl iron derivative and quinoid and (b) at least one salt selected from a group consisting of tetrafluoroborates, hexafluorophosphates and hexafluoroantimonates.

Another example of photoinitiator for photopolymerization is EP 1006119: it discloses a photo-latent initiator for photopolymerization comprising a crystalline ion-association substance having the general formula (I): $[\{C_5(R^1)_n\}_{2m}M_m]^{L+}[\{B(R^2)_4\}^-]_L$, wherein n is 4 or 5.

The article "Mutual Z-/E-isomerization of ferrocenylmethylene- and arylidene-substituted carbo- and heterocycles" (J.Organomet.Chem. 1988, Vol. 559, No.1-2, pages 43-45) discloses an example of a compound of formula (I) $[\{C_5(R^1)_n\}_{2m}M_m]^{L+}[\{B(R^2)_4\}^-]_L$, wherein $R_1$ is cycloalkyl group; M is Fe and $R_2$ is aryl group having, however a different coordination position of the anion moiety $(BPh)_4^-$ to the cation moiety.

SU-A-748221 (Database WPI Section Ch, Week 198113 AN 1981-22920D) discloses a ion selective electrode useful in quantitative determination of tetra phenyl-borate salts in aqueous solution, the sensitive element being a heterogeneous system comprising crystalline diethyl-dicyclo-pentadienyl-iron tetraphenyl-borate.

US 5 521265 discloses the use of metallocenes as polymerization catalysts in the polymerization of olefins.

On the contrary, regarding to potopolymerization of organosiloxane, it is very hard to find out the example. An example can be found only in Kevin D. Belfield et al., "Photoinitiated cationic ring-opening polymerization of a cyclosiloxane", Polymer Bulletin 38, pp. 165-168 (1997). Kevin et al. disclosed that when hexamethylene cyclotrisiloxane is exposed with U.V. light in the presence of sulfonium or iodonium salt or iminosulfonate derivative, it is subjected

to photo-initiating cationic ring-opening polymerization in solution or in the absence of solvent.

Regarding to thermal hardening (polymerization) reaction which is carried out at room temperature or under heating condition, as example of catalyst for polymerization of epoxy compound, tertiary amine (such as benzylmethyl amine, 2,4,6-trisdimetylamine methylphenol, etc.), imidazole (such as 2-methylimidazole, 2-ethyl-4-methylimidazole, 2-heptadecylimidazole etc.), Lewis acid (such as $BF_3$ monoethylamine, $BF_3$ piperazine, etc.) have been known.

The thermal hardening reaction of organosiloxane compound is almost classified into addition type and condensation type: in reaction of the former type, peroxide or platinum compound is used as catalyst and in reaction of the latter type, metal salt of carboxylic acid is used.

As mentioned above, epoxy resins and silicone resins have been widely used. However, on producing the epoxy resins or silicone resins by hardening (or polymerizing) each monomer, the catalyst or initiator used in the thermal polymerization or photopolymerization of epoxy compound is completely different from that used in the thermal polymerization or photopolymerization of organosiloxane compound, and additionally, the initiator for photopolymerization of organosiloxane compound has not almost been known.

<u>Disclosure of the Invention</u>

The inventor has newly developed a polymerization iniziator for cationically polymerizable organic substance, said cationically polymerizable organic substance being a compound or mixture of at least two compounds selected from among methylol compounds, ethylenic compounds, polyacetal compounds, organosiloxane compounds, polyamide compounds and heterocyclic compounds, said initiator being characterised in that it comprises a crystalline ion-association substance having a general formula (I):

$$[\{C_5(R^1)_n\}_{2m}M_m]^{L+}[\{B(R^2)_4\}^-]_L.$$

wherein M is Fe; $C_5$ is a cyclopentadienyl group; $R^1$ is an alkyl group, an organoboranyl group or an alkylene group; <u>n</u> is a number within the range of 0 to 3, <u>m</u> is either 1 or 2, L is either 1 or 2; $R^2$ is halogenated aryl group, halogen haloform aryl group, and the four $R^2$(s) are the same to each other.

It has been found that this initiator has an unique characteristics; that is, it has an ability to initiate not only photopolymerization but thermal polymerization of cationically polymerizable organic substances, especially both of epoxy compound and organosiloxane compound.

It is disclosed a method of producing the novel initiator having the above-mentioned formula (I), characterized in that metallocene derivative of mono- or di-nucleus structure having a general formula (II);

$$\{C_5(R^1)_n\}_{2m}M_m$$

wherein M, $C_5$, $R^1$, <u>m</u> and <u>n</u> have the same meaning as mentioned above, is reacted with a tetradentate borate complex compound having a general formula (III);

$$\{B(R^2)_4\}X$$

wherein $R^2$ has the same meaning as mentioned above and X is an alkali metal atom.

<u>Best Mode for Carrying out the Invention</u>

The polymerization initiator of the present invention comprises, as seeing from the general formula (I), metallocene derivative cation and tetradentate borate complex anion wherein the four ligands are the same to each other.

In the general formula (I), the $R_1$ substituent is alkyl group, organoboryl group, or an alkylene group. More particularly, the alkyl group is selected from among lower alkyl groups such as methyl group, ethyl group, propyl group and butyl group, or pentyl group or amyl group.

The alkylene group is polyacetylene group, polymethylene group [$-(CH=CH)_n-$, $-(CH_2)_n-$: n = 2 to 6], etc.

The n ($R^1$)s may be same to or different from each other.

Also, the metallocene derivative cation which constitutes the crystalline ion-association substance having the general formula (I) may be metallocenophane cation having mono-nucleus structure wherein the substituent on one cyclopentadienyl is bonded to the substituent on another cyclopentadienyl within one molecule; or dimetallocene cation having di-nucleus structure wherein the substituent on one of cyclopentadienyl within one molecule is bonded to the

substituent on cyclopentadienyl within other molecule; or indenyl group having organic group bridging two neighboring carbon atoms.

The transition metal of center nucleus (M) in the general formula (I) is Fe (III).

The specific examples of the above-mentioned metallocene derivative cation are tert.-amyl ferrocenium, n-butyl ferrocenium, 1,1'-di-n-butyl ferrocenium, 1,1'-dimethyl ferrocenium, ethyl ferrocenium, (dihydroxyboranyl) ferrocenium, ferrocenium, t-butyl ferrocenium, diferrocenium derivative cation, 1,2,4,1',2',4'-hexamethyl ferrocenium cation, tetramethyl ferrocenium cation and hexamethyl ferrocenium cation.

On the other hand, the counter anion of the crystalline ion-association substance of the present invention is tetradentate borate complex anion $[B(R^2)_4]^-$. In the formula, $R^2$ is a ligand coordinated to boron atom (B) of the center nucleus and is selected from among halogenated aryl group, halogen haloform aryl group, but the four ligands ($R^2$) are the same to each other. Also, the two adjacent ligands may chemically bond to each other to form two rings bonding the ligands within one borate complex anion.

Embodiments of the tetradentate borate complex anion are tetrakis(4-fluorophenyl) borate anion, tetrakis (4-fluorobiphenyl) borate anion, tetrakis[3,5-bis(trifluoromethyl)phenyl] borate anion, tetrakis(3,5-difluorophenyl) borate anion, tetrakis[4-(trifluoromethyl)phenyl] borate anion, tetrakis(2,3,5,6-tetrafluorophenyl) borate anion, tetrakis (1,2,3,4,5-pentafluorophenyl) borate anion, tetrakis(3,4,5-trifluorophenyl) borate anion, tetrakis[3,5-bis (1,1,1,3,3,3-hexafluoro-2-methoxy-2-propyl)phenyl] borate anion, tetrakis(2,4,6-trifluorophenyl) borate anion, tetrakis (3,5-dichlorophenyl) borate anion, tetrakis(4-chlorophenyl) borate anion.

Preferably are tetrakis(4-fluorophenyl) borate anion, tetrakis[3,5-bis(trifluoromethyl)phenyl] borate anion, tetrakis(3,5-difluorophenyl) borate anion, tetrakis[4-(trifluoromethyl)phenyl] borate anion, tetrakis[3,5-bis(1,1,1,3,3,3-hexafluoro-2-methoxy-2-propyl)phenyl] borate anion, tetrakis(4-chlorophenyl) borate anion, tetrakis(3,5-dichlorophenyl) borate anion, tetrakis(4-fluorobiphenyl) borate anion, and tetrakis(1,2,3,4,5-pentafluorophenyl) borate anion.

The crystalline ion-association substance of the present invention contains bulky ligand in cyclopantadienyl moiety of the metallocene derivative cation. Therefore, the transition metal of center nucleus under high oxidation state may maintain thermal stability, and the crystallinity between the metallocene derivative cation and the anion complex to be associated is synergistically increased.

The borate complex anion is composed of boron atom and four identical ligands which are situated at tetrahederal positions around the boron center. The ligand has side chain groups. Accordingly, the external factor to induce decomposition of the anion, such as attack by active compounds and/or atom, may be sterically inhibited similarly to the metallocene derivative cation. Also $R_1$, is introduced into the side chain of the ligand, therefore the electron density of the carbon atom attached to boron atom is decreased. Whereby, the boron atom center is protected from the external attack.

As a result, the crystalline ion-association substance of the present invention is highly stable when preserving alone or in the form of a mixture with the cationically polymerizable organic substance and possibly various additives.

Now, a method of producing the present crystalline ion-association substance having the general formula (I) will be explained.

The crystalline ion-association substance is produced by reacting metallocene derivative having the general formula (II);

$$\{C_5(R^1)_n\}_{2m}M_m$$

wherein M, $C_5$, $R^1$, <u>m</u>, and <u>n</u> have the same meaning as mentioned above, with tetradentate borate complex compound having the general formula (III);

$$\{B(R^2)_4\}X$$

wherein B and $R^2$ have the same meanings as mentioned above, and X is alkali metal atom.

The reaction between the metallocene derivative and the borate complex compound is carried out in an acidic solvent at the mole ratio of metallocene derivative to borate complex compound of 1:1 in case of monometallocene or of 1:2 in case of dimetallocene and at the temperature ranging from ordinary temperature to 100°C, preferably from ordinary temperature to 60°C.

The usable acidic solvent is 3-50% aqueous solution of sulfuric acid, preferably 5-20% aqueous solution of sulfuric acid.

In case of using metal salt, the reaction is carried out in mixed solvent between pure water and organic solvent at the temperature ranging from 0 to 100°C, preferably from ordinary temperature to 70°C with using oxidizing agent (electron scavenger) such as $FeCl_3$, etc., at the ratio of 1:0.1-1, preferably 1:0.1-0.3 with respect to the metallocene

derivative.

As the organic solvent, an aprotic solvent is preferable. For example, acetone, acetonitrile, or the like is used.

The mixing ratio between organic solvent and pure water is 1:0.1-1, preferably 1:0.1-0.5.

As other methods for production, an electrode oxidation method in a polar solvent may be used.

The examples of the crystalline ion-association substance produced by the aforesaid reaction are ferrocenium/tetrakis(3,5-difluorophenyl) borate, dimethyl ferrocenium/tetrakis(3,5-difluorophenyl) borate, 1,2,,4,1',2',4'-hexamethyl ferrocenium/tetrakis(3,5-difluorophenyl) borate, n-butyl ferrocenium/tetrakis(3,5-difluorophenyl) borate, tert.-amyl ferrocenium/tetrakis(3,5-difluorophenyl) borate, dihydroxyboranyl ferrocenium/tetrakis(3,5-difluorophenyl) borate, ferrocenium/tetrakis[3,5-bis(trifluoromethyl)phenyl] borate, dimethyl ferrocenium/tetrakis[3,5-bis(trifluoromethyl)phenyl] borate, 1,2,4,1',2',4'-hexamethyl ferrocenium/tetrakis[3,5-bis(trifluoromethyl)phenyl] borate, dimethyl ferrocenium/tetrakis(pentafluorophenyl) borate, 1,2,4,1,',2',4'-hexamethyl ferrocenium/tetrakis(pentafluorophenyl) borate, 1,2,4,1',2',4'-hexamethyl ferrocenium/tetrakis[4-(trifluoromethyl)phenyl] borate, (2-ferrocenylethyl) ferrocenium/tetakis[3,5-bis(trifluoromethyl)phenyl] borate, ferrocenium/tetrakis(3,5-difluorophenyl) borate, ferrocenium/tetrakis[3,5-bis(trifluoromethyl)phenyl] borate, ferrocenium/tetrakis(2,3,5,6-tetrafluorophenyl) borate, ferrocenium/tetrakis(1,2,3,4,5-pentafluorophenyl) borate, ferrocenium/tetrakis[4-(trifluoromethyl)phenyl] borate, ferrocenium/tetrakis(4-fluorophenyl) borate, ferrocenium/tetrakis(3,4,5-trifluorophenyl) borate, dimethyl ferrocenium/tetrakis(3,5-difluorophenyl) borate, dimethyl ferrocenium/tetrakis[3,5-bis(trifluoromethyl)phenyl] borate, dimethyl ferrocenium/tetrakis(2,3,5,6-tetrafluorophenyl) borate, dimethyl ferrocenium/tetrakis(1,2,3,4,5-pentafluorophenyl) borate, dimethyl ferrocenium/tetrakis[4-(trifluoromethyl)phenyl] borate, dimethyl ferrocenium/tetrakis(4-fluorophenyl) borate, dimethyl ferrocenium/tetrakis(3,4,5-trifluorophenyl) borate, tetramethyl ferrocenium/tetrakis(3,5-difluoropheny) borate, tetramethyl ferrocenium/tetrakis[3,5-bis(trifluoromethyl)phenyl] borate, tetramethyl ferrocenium/tetrakis(2,3,5,6-tetrafluorophenyl) borate, tetramethyl ferrocenium/tetrakis(1,2,3,4,5-pentafluorophenyl) borate, tetramethyl ferrocenium/tetrakis[4-(trifluoromethyl)phenyl] borate, tetramethyl ferrocenium/tetrakis(4-fluorophenyl) borate, tetramethyl ferrocenium/tetrakis(3,4,5-trifluorophenyl) borate, hexamethyl ferrocenium/tetrakis(3,5-difluorophenyl) borate, hexamethyl ferrocenium/tetrakis[3,5-bis(trifluoro)phenyl] borate, hexamethyl ferrocenium/tetrakis(2,3,5,6-tetrafluorophenyl) borate, hexamethyl ferrocenium/tetrakis(1,2,3,4,5-pentafluorophenyl) borate, hexamethyl ferrocenium/tetrakis[4-(trifluoromethyl)phenyl] borate, hexamethyl ferrocenium/tertrakis(4-fluorophenyl) borate, hexamethyl ferrocenium/tetrakis(3,4,5-trifluorophenyl) borate, n-butyl ferrocenium/tetrakis(3,5-difluorophenyl) borate, n-butyl ferrocenium/tetrakis[3,5-bis(trifluoromethyl)phenyl] borate, n-butyl ferrocenium/tetrakis(2,3,5,6-tetrafluorophenyl) borate, n-butyl ferrocenium/tetrakis(1,2,3,4,5-pentafluorophenyl) borate, n-butyl ferrocenium/tetrakis[4-(trifluoromethyl)phenyl] borate, n-butyl ferrocenium/tetrakis(4-fluorophenyl) borate, n-butyl ferrocenium/tetrakis(3,4,5-trifluorophenyl) borate, tert.-amyl ferrocenium/tetrakis(3,5-difluorophenyl) borate, tert.-amyl ferrocenium/tetrakis[3,5-bis(trifluoromethyl)phenyl] borate, tert.-amyl ferrocenium/tetrakis(2,3,5,6-tetrafluorophenyl) borate, tert.-amyl ferrocenium/tetrakis(1,2,3,4,5-pentafluorophenyl) borate, tert.-amyl ferrocenium/tetrakis[4-(trifluoromethyl)phenyl] borate, tert.-amyl ferrocenium/tetrakis(4-fluorophenyl) borate, and tert.-amyl ferrocenium/tetrakis(3,4,5-trifluorophenyl) borate.

The crystalline ion-association substance of the present invention may have such a structure that one of four identical ligands of the borate complex anion is closed to the transition metal center of the metallocene derivative cation and is sandwiched between the two cyclopentadiene ligands of the metallocene derivative cation; the metallocene derivative cation per se having such a structure that the two cyclopentadiene ligands with various structure are positioned in the form of dihederal structure with respect to the transition metal center.

In case that the ligand of the anion complex is a substituted phenyl group, in comparison with ligand having substituent only at para-position, ligand having two substituents at 3- and 5-position enters to the deeper position between two cyclopentadiene ligands of the cation, and the transition metal center of the cation is sandwiched by the two substituents of the ligand of the anion, whereby the ion-association substance having higher crystallinity is produced.

The polymerization initiator for cationically polymerizable organic substance which comprises the crystalline ion-association substance having the general formula (I) has an ability to initiate not only photopolymerization but thermal polymerization, as well as thermal polymerization plus photopolymerization.

In photopolymerization of cationically polymerizable organic substance, the polymerization initiator of the present invention is used in the amount of from 0.1 to 10 weight parts, preferably 0.5 to 4 weight parts with respect to 100 weight parts of the cationically polymerizable organic substance; when the cationically polymerizable organic substance absorbs usually 2000 to 9000 $mJ/cm^2$ of energy by irradiation with U.V. light having the wavelength of 200-700nm, basically 200-400nm, a high molecular polymer is produced. However, the irradiation operation with more energy may be required depending upon the type of polymerizable substance. The irradiation can be carried out at any condition, that is, at ordinary temperature, under cooling condition, or under heating condition; and at atmospheric pressure or vacuum, or in the presence of inert gas.

In case of photopolymerization plus thermal polymerization, after the photopolymerization is carried out under the above-mentioned condition, the un-reacted substance or the obtained polymer having low polymerization degree

is heated at 70-200°C for 10 min. to 1 hour, preferably at 100-160°C for 10-30 min., whereby, polymer product with high molecular weight is be produced.

In case of thermal polymerization, the polymerization initiator of the present invention is used in the amount of 0.1-10 weight parts, preferably 0.5-4 weight parts with respect to 100 weight parts of the cationically polymerizable organic substance. The cationically polymerizable organic substance is heated at 70-200°C for 10 min. to 2 hours, preferably at 140-180°C for 30-90min. to produce polymer product with high molecular weight.

When compatibility between the cationically polymerizable organic substance and the polymerization initiator is poor, a suitable solvent such as hydrocarbon solvents, halogenated hydrocarbon solvents, alcoholic solvents, phenolic solvents, ether/acetal solvents, ketone solvents, ester solvents, nitrogen-containing compound solvents may be used. The concrete examples of the solvent are dichloromethane, chloroform, methanol, tetrahydrofuran, acetone, metylethyl ketone, acetonitorile, etc. The solvent is used in 5-3 times amount with respect to 100 weight parts of the cationically polymerizable organic substance, that is, 500-300 weight parts.

It is also possible to add sensitizer to the reaction system in the photopolymerization. The examples of such sensitizer are benzophenone, 4-phenylbenzophenone, 3,3-dimethyl-4-methoxybenzophenone, 4,4-dimethoxybenzophenone, thioxanthone, 2-methylthioxanthone, 2,4-dimethylthioxanthone, isopropylthioxanthone, 2,4-diethylthioxanthone, 2,4-diisopropylthioxanthone, 9,10-phenanthrenequinone, dibenzosuberone, 2-methoxynaphthalene, 4,4-diethyl isophthalophenone, anthraquinone, 2-methylanthraquinone, 2-ethylanthraquinone, hydroxyanthraquinone, aminoanthraquinone, anthraquinone sulfonic acid, acetophenone, diethoxyacetophenone, 2-ethoxy-2-phenylacetophenone, 4-methoxyacetophenone, 4,4-dimethoxyacetophenone, 4-phenylacetophenone, anthracene, 1,2-benzanthracene, 9-cyanoanthracene, 9,10-dicyanoanthracene, 2-ethyl-9,10-dimethoxyanthracene, 9,10-bis(phenylethyl)antracene, benzoin isopropyl ether, dibenzosuberenone, dibenzosuberenol, dibenzosuberane, 4-phenylbenzophenone, 4-hydroxybenzophenone, 1-nitroanthraquinone, 1,2-benzanthraquinone, 2-chloroanthraquinone, 2,3-dichloro-5,6-dicyano-1,4-benzoquinone, 2,3-dimethoxy-5-methyl-1,4-benzoquinone, methoxybenzoquinone, 2,5-dichloro-p-benzoquinone, 2,6-dimethyl-1,4-benzoquinone, 4-benzoyldiphenyl, o-benzoylbenzoic acid methyl ester, 4-benzoyl-4-methyldiphenyl sulfide, o-benzoylbenzoic acid, quinizarin, camphorquinone, benzil, 2,3-dichloro-1,4-naphtoquinone, anthorone, xantone, 2-methylbenzophenone, 3-methylbenzophenone, 4-methylbenzophenone, 2,5-dimethylbenzophenone, 3,4-dimethylbenzophenone, 4-methoxybenzophenone, 4,4-dihydroxybenzophenone, 3-hydroxybenzophenone, 4-ethoxyacetophenone, 2,2-diethoxyacetophenone, 2,4-dimethoxyacetophenone, 2,5-dimethoxyacetophenone, 2,6-dimethoxyacetophenone, anisoin, desoxyanisoin, benzoinmethylether, etc.

Alternatively, in case of using visible ray, conventional dyestuff type sensitizers such as coumarins, thiazines, azines, acridines, and xanthenes may be used.

The sensiter is used in the amount of 0.1-10 weight parts, preferably 0.5-5 weight parts with respect to the 100 weight parts of the cationically polymerizable organic substance.

The examples of cationically polymerizable organic substances that can be polymerized with the polymerization initiator of the present invention are organosiloxane compounds, epoxy compounds and mixture thereof and heterocyclic compounds.

For example, compounds which have, as functional group, cyclic ether group containing more than two carbon atoms and one oxygen atom, especially, epoxy compounds having cyclic ether group of three-members ring type are effective.

Some typical examples of epoxy compound are monoepoxy compounds such as olefin oxide, butylglycidyl ether, styrene oxide, phenylglycidyl ether and p-alkylphenolglycidyl ether which may be used as reactive diluent; polyepoxide compounds having at least two cyclic ether groups of three-members ring type in side chain and at chain terminal within one molecule, such as, for example, cresol-novolak type epoxy compound, phenol-novolak type epoxy compound, bisphenol A type epoxy compound, bisphenol F type epoxy compound, and alicyclic epoxy compounds, etc. Also, their hydrolysis products or halogenation products such as fluorinated or brominated type compounds may be used.

Monooxetane compound having cyclic ether group of four-members ring type, and oxetane compound having more than two cyclic ether groups of four-members ring type within one molecule are also effective.

The polymerization initiator of the present invention is also effective for polymerization of organosiloxane compounds, especially cyclic siloxanes. Oligomers containing cyclic siloxane group in molecule, at terminal or as pendant group are also effective.

It is possible to use at least two cationically polymerizable organic substances in the form of mixture. The term "at least two substances" means not only a mixture consisting of two or more substances which are of the same type as each other but also a mixture consisting of two or more substances which are of different type from each other, such as, for example, a mixture consisting of cyclic siloxane and epoxy compound.

Although the reaction mechanism in polymerization of cationically polymerizable organic substance using the polymerization initiator of the present invention has not been fully clarified, it is presumed as follows.

On U.V. light irradiation or heating, a part of ferrocenium cation is capable of transforming into active species

(Y) with a different structure, as shown in the following Scheme I. In the active species (Y), one of the two cyclopentadienyl ligands coordinates to Fe atom via three carbon atoms, whereby the steric hindrance around Fe atom is moderated.

The fact that the coordination mode of cyclopentadienyl ligand changes depending on a condition has been observed in many organometallic complexes (for example, J.M. O'Connor, C.P. Casey, Chem. Rev. 87, p.307-318 (1987)).

In the absence of a monomer, the active species (Y) is returned to the original ground state again. As a result, under U.V. light irradiation or heating, an equilibrium mixture of the original ground state and the active species (Y) is formed. In the presence of a monomer, however, the ferrcenium cation moiety in the active species (Y), with small degree of steric hinderance around Fe atom, initiates a polymerization at the Fe center of the cation moiety, and causes propagation of the polymer chain by repeated insertion of monomer.

**Scheme I**

**Presumable Reaction Mechanism**

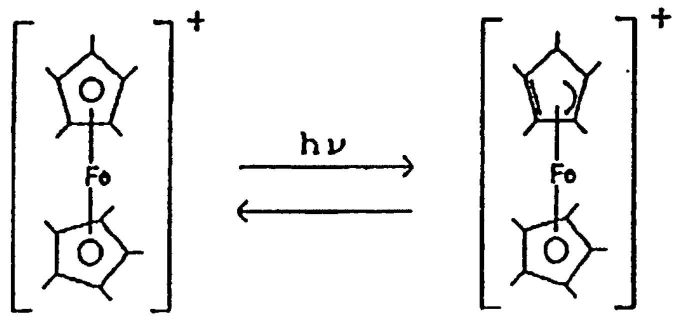


(y)

ground state

active species

for polymerization

**Polymerization Reaction of Epoxy Compound** **(M is a center metal of active species)**

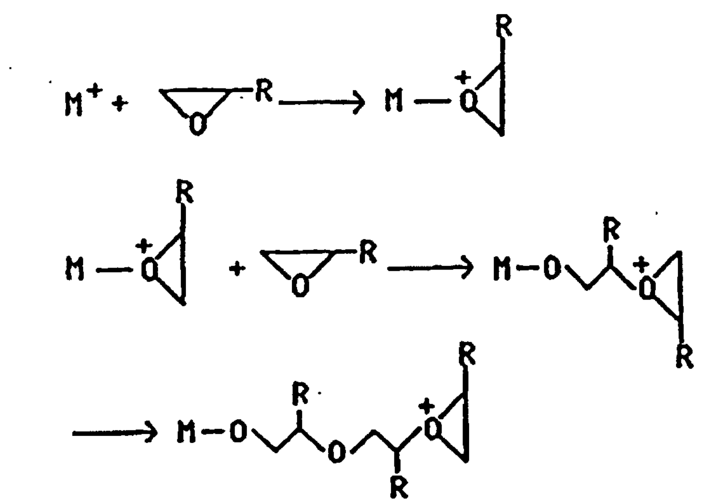

($M^+$ corresponds to $[\{C_5(R^1)_n\}_{2m}M_m]^+$)

**Polymerization Reaction of Organosiloxane compound (M is a center metal of active species)**

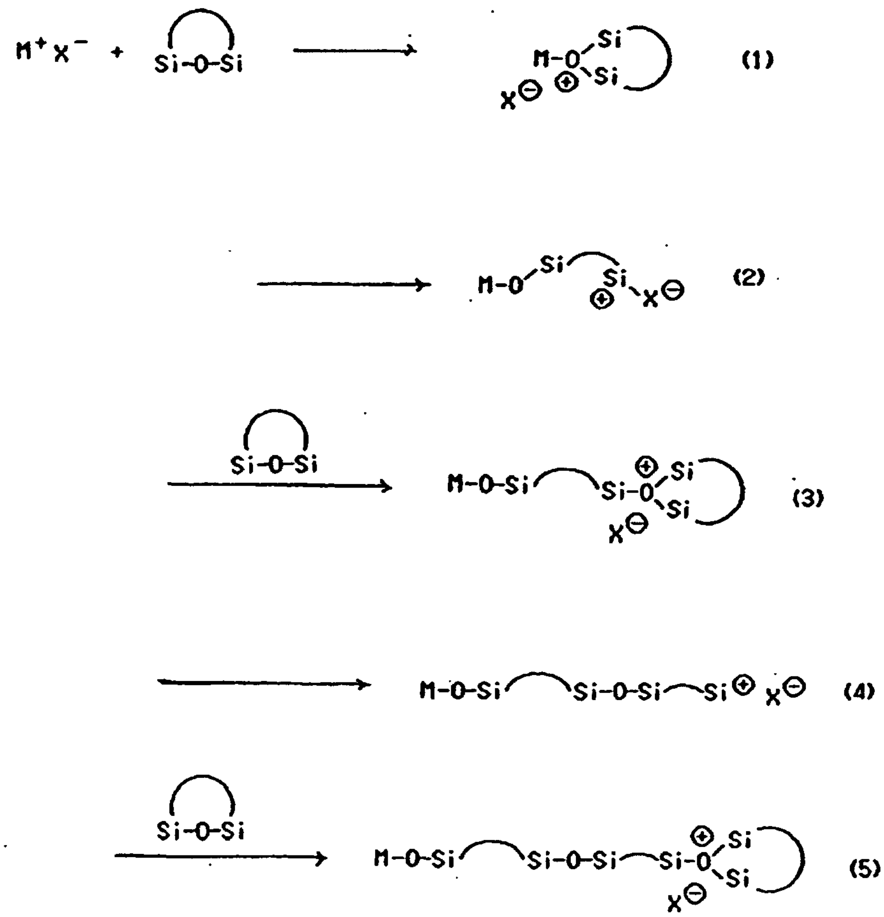


($M^+$ corresponds to $[\{C_5(R^1)_n\}_{2m}M_m]^+$)

On the other hand, though the polymerization reaction is partly halted by a chain transfer and so on, the U. V. light irradiation or heating keeps generating the active species (Y) by the photo- or thermal excitation. The produced active species initiates polymerization. Thus, under irradiation with U.V. light or heating, the continuous transformation of monomer to polymer occurs, but cutting-off of U.V. light or heating stops generation of new active species for polymerization reaction. Therefore, when the existing active species is exhausted, the polymerization itself terminates.

The polymerization initiator of the present invention has the following characteristics;

I) when the initiator exists alone,

(a) it is highly resistant to heat, moisture (water)and acid and alkali;
(b) it has good compatibility with cationically polymerizable organic substances such as epoxy compound;

II) when the initiator exists in the form of a mixture with the cationically polymerizable organic substances,

(a) it has an ability to harden thick film even when it is used in the small amount (0.5-4%);
(b) it is not subjected to a decomposition by the moisture (water) in the mixture;
(c) it has good stability in viscosity of the mixture, and

III) as to the characteristics of the hardened product produced by photopolymerization, thermal polymerization, or photopolymerization plus thermal polymerization,

(a) the hardened product has no electrolytic corrosion, for example, it shows great anti-electrolytic corrosion toward copper strip;
(b) the hardened product has the substantially unchanged characteristics of the starting material itself; for example, when it is mixed with the cationiaclly polymerizable organic substance such as epoxy compound, the obtainable polymer product (hardened product) has the unchanged inherent characteristics of epoxy compound, and additionally, it is possible to produce composite product (hardened product) consisting of at least two cationically polymeraizable organic substances which are of the different type from each other.

In preparation of the crystalline ion-association substance of the present invention, commercially available products (for example, products sold by Tokyo Chemicals Co. or Aldolich Co.) can be used as metallocene derivative. Other metallocene derivatives can be prepared by the well-known methods for preparation disclosed in the following references:

a) precursors;

- L. DeVRIES, J. Org. Chem., 25 1838 (1960)
- R.S. THRELKEL, J.E. BERCAW., J. Organometallic Chemistry, 136 1~5 (1977)
- D. FEITLER, G.M. WHITESIDES., Inorg. Chem. Vol.15, No.2, 466 (1976)

b) metallocene derivatives;

- D.M. DUGGAN, D.N. HENDRICKSON., Inorg. Chem. Vol.14, No.5, 955 (1975)
- KAI-MING, J.C. CALABRESE, W.M. BEIFF, J.S. MILLER., Organometallics, 10 688~693 (1991)

Also, among the tetradentate borate complex compounds, as tetrakis[3,5-bis(trifluoromethyl)phenyl] borate sodium salt and tetrakis(1,2,3,4,5-pentafluorophenyl) borate lithium salt, commercially available products sold by DOJIN CHEMICALS Co. and Asahi Glass Co., Ltd., respectively, can be used; but, for example, tetrakis(3,5-difluorophenyl) borate complex compound may be prepared as described in the following reference example.

Reference Example

Synthesis of tetrakis(3,5-difluorophenyl) borate sodium salt

A dried flask made of Pyrex glass (capacity: 500ml) provided with a reflux condenser was charged with inert gas to purge the air from the flask. Then, metallic magnesium (4.65g) and anhydrous diethyl ether (100ml) were fed to the flask, and the resulting solution was stirred and cooled by ice bath. A solution prepared separately by adding anhydrous diethyl ether (50ml) to 1-bromo-3,5-difluorobenzene (43.52g) was dropped thereto for an hour, and the resulting solution was left still for three hours. At the end of the reaction, a liquid containing boron trifluoride ether complex (4.542g) in anhydrous diethyl ether was dropped during 40 minutes, and left still for 16 hours with stirring at the room temperature. Then, an aqueous solution of sodium carbonate (30g) in pure water (100ml) was dropped during 30 minutes. After the solution was kept stirring at the room temperature for 24 hours, the water phase and the organic phase were separated from each other. The separated organic phase was dried with sodium sulfate and filtered; the filtrate was put into an evaporator (oil bath temperature: 70°C); and diethyl ether was evaporated, thereby obtaining a liver-brown colored solid.
The liver-brown colored solid was further purified with silica gel, and white solid of tetrakis(3,5-difluorophenyl) borate sodium salt (10.3g) was obtained.
The following literatures were referred.

- H. KOBAYASHI, T. SONODA, Y. INUKAI, K. TAKUMA., Technical Reports of ASAHI GLASS CO., LTD., 42 (1983)
- J. ICHIKAWA, H. KOBAYASHI, T. SONODA., Organic Synthetic Chemistry, 46, 943~953 (1988)
- K. FUKUI, M. KASHIWAGI, H. MIYAMOTO, A. SONODA, J. ICHIKAWA, H. KOBAYASHI, T.SONODA., J. Fluorine Chem., 57, 307~321(1992)

Example 1

Synthesis of ferrocenium/tetrakis(3,5-difluorophenyl) borate

In a dried eggplant-type flask made of Pyrex glass (capacity: 300ml) provided with a magnetic stirrer, 1g of

commercially available ferrocene (CAS 102-54-5) was added to 10g of conc. sulfuric acid. The resulting solution was stirred at room temperature for 5 hours, and then 100ml of pure water was gradually added thereto. The flask containing the solution was cooled, and the solution was filtered with PTFE filter paper.

The filtrate was transferred to a beaker made of Pyrex glass (capacity: 300ml), and ethanol solution (5ml) containing 2.75g of tetrakis(3,5-difluorophenyl) borate sodium salt was added thereto with stirring by a magnetic stirrer. Blue colored crystal precipitated.

The precipitate was filtered, washed with pure water, dried by evaporator, washed with toluene, and dried again by evaporator.

1.6g of ferrocenium/tetrakis(3,5-difluorophenyl)borate was obtained (yield 43%).

Example 2

Synthesis of diamethyl ferrocenium/tetrakis(3,5-difluorophenyl) borate

In the similar apparatus to that used in Example 1, 1g of commercially available dimethyl ferrocene (CAS 1291-47-0) was added to 10g of conc. sulfuric acid. The resulting solution was stirred at room temperature for 16 hours, and then 100ml of pure water was added thereto. The flask containing the solution was cooled, and the solution was filtered with PTFE filter paper.

The filtrate was transferred to a beaker made of Pyrex glass (capacity: 300ml), and ethanol solution (5ml) containing 2.38g of tetrakis(3,5-difluorophenyl) borate sodium salt was added with stirring by a magnetic stirrer. Blue colored crystal precipitated.

The precipitate was filtered, washed with pure water, dried by evaporator, washed with toluene, and dried again by evaporator.

1.68g of dimethyl ferrocene/tetrakis(3,5-difluorophenyl) borate was obtained(yield 53%).

The identification of the obtained substance was carried out by $^1$H-NMR analysis (Nuclear Magnetic Resonance Equipment EX-400, NEC Co.), and the following data was obtained.

$^1$HNMR [25°C, deuterated acetone, chemical shift of peak(ppm)]: 3.20 (cyclopentadienyl); 6.0-8.0 (phenyl)

Example 3

Synthesis of 1,2,4,1',2',4'-hexamethyl ferrocenium/tetrakis(3,5-difluorophenyl) borate

In the similar apparatus to that used in Example 1, 1g of 1,2,4,1',2',4'-hexamethyl ferrocene was added to 15g of conc. sulfuric acid. The resulting solution was stirred at room temperature for 16 hours, and then 100ml of pure water was added thereto. The flask containing the solution was cooled, and the solution was filtered with PTFE filter paper. The filtrate was heated to 60°C by water bath with stirring, and ethanol solution (5ml) containing 1.89g of tetrakis (3,5-difluorophenyl) borate sodium salt was added. Blue-green colored crystal precipitated.

The precipitate was filtered, washed with pure water, dried by evaporator, washed with toluene, and dried again by evaporator.

1.29g of 1,2,4,1',2',4'-hexamethyl ferrocenium/tetrakis(3,5-difluorophenyl) borate was obtained (yield 47.5%).

Example 4

Synthesis of n-butyl ferrocenium/tetrakis(3,5-difluorophenyl) borate

To an eggplant-type flask made of Pyrex glass (capacity: 100ml) provided with a magnetic stirrer, 0.32g of iron(III) chloride and 30ml of acetonitrile were fed and iron(III) chloride was dissolved into acetonitrile. Furthermore, 0.48g of commercially available n-butyl ferrocene (CAS 31904-29-7) and 20ml of pure water were added thereto, and the resulting solution was stirred for 1 hour. Then, 0.97g of tetrakis(3,5-difluorophenyl) borate sodium salt was added thereto. The resulting solution was heated to 60°C by water bath with stirring and left still for 30 min. Thereafter, water and organic solvent of the reaction solution were distilled out by evaporator. To the obtained residue, dichloromethane and pure water were added, and the solution was stirred for 30min. Then, the water phase and the organic phase were separated from each other. The water phase was introduced into evaporator to remove the solvent. The obtained residue was dried, washed with toluene, and dried again by evaporator.

1g of n-butyl ferrocenium/tetrakis(3,5-difluorophenyl) borate was obtained (yield 71.5%).

The identification was carried out by $^1$H-NMR analysis similarly to the Example 2, and the following data was obtained.

$^1$HNMR [25°C, deuterated acetone, chemical shift of peak(ppm)]: 3.15 (dicyclopentadienyl); 6.71, 6.47 (phenyl);

0.86-2.04 (butyl)

Example 5

Synthesis of tert.-amyl ferrocenium/tetrakis(3,5-difluorophenyl) borate

By using the similar apparatus and procedure to those used in the Example 4, 0.87g of tert.-amyl ferrocenium/tetrakis(3,5-difluorophenyl) borate was obtained (yield 60.7%), starting from 0.51g of commercially available tert.-amyl ferrocene (CAS 53954-86-2), 0.32g of iron(III) chloride, 30ml of acetonitrile, 20ml of pure water and 0.97g of tetrakis (3,5-difluorophenyl) borate sodium salt.
$^1$HNMR [25°C, deuterated acetone, chemical shift of peak(ppm)]: 32.1 (cyclopentadienyl); 12.82 (methylene); 6.72, 6.48 (phenyl); -12.1 (methyl(amyl))

Example 6

Synthesis of (dihydroxyboryl) ferrocenium/tetrakis(3,5-difluorophenyl) borate

By using the similar apparatus and procedure to those ised in the Example 4, 0.46g of (dihydroxyboryl) ferrocenium/tetrakis(3,5-difluorophenyl) borate was obtained (yield 51%), starting from 0.3g of commercially available ferroceneboronic acid (CAS 12152-94-2), 0.021g of iron(III) chloride, 30ml of acetonitrile, 10ml of pure water and 0.635g of tetrakis(3,5-difluorophenyl) borate sodium salt.

The identification was carried out by $^1$H-NMR analysis similarly to the Example 2, and the following data was obtained.
$^1$HNMR [25°C, deuterated acetone, chemical shift of peak(ppm)]: 32.6 (cyclopentadienyl); 6.72, 6.44 (phenyl)

Example 7

Synthesis of ferrocenium/tetrakis[3,5-bis(trifluoromethyl) phenyl] borate

In the similar apparatus to that used in Example 1, 0.5g of commercially available ferrocene was added to 10g of conc. sulfuric acid. The resulting solution was stirred at room temperature for 5 hours, and then 100ml of pure water was added thereto. The flask containing the solution was cooled, and the solution was filtered with PTFE filter paper. The filtrate was transferred to a beaker made of Pyrex glass (capacity: 300ml), and ethanol solution (7ml) containing 2.48g of tetrakis[3,5-bis(trifluoromethyl)phenyl] borate sodium salt (CAS 79060-88-1) was added. Blue colored crystal precipitated.

The precipitate was filtered, washed with pure water, dried by evaporator, washed with toluene, and dried again by evaporator.

1.73g of ferrocenium/tetrakis[3,5-bis(trifluoromethyl)phenyl] borate was obtained (yield 61.3%).

Example 8

Synthesis of dimethyl ferrocenium/tetrakis[3,5-bis(trifluoromethyl)phenyl] borate

By using the similar apparatus and procedure to those used in the Example 1, 1.36g of dimrthyl ferrocenium/tetrakis[3,5-bis(trifluoromethyl)phenyl] borate was obtained (yield 54.1%), starting from 0.5g of dimethyl ferrocene, 10g of conc. sulfuric acid, and ethanol solution (7ml) containing 2.15g of tetrakis[3,5-bis(trifluoromrthyl)phenyl] borate sodium salt.

The identification was carried out by $^1$H-NMR analysis similarly to the Example 2, and the following data was obtained.
$^1$HNMR [25°C, deuterated acetone, chemical shift of peak(ppm)]: 34.5, 31.2 (cyclopentadienyl); 7.78, 7.67 (phenyl); -10.63 (methyl)

Example 9

Synthesis of 1,2,4,1',2',4'-hexamethyl ferrocenium/tetrakis[3,5-bis(trifluoromethyl)phenyl] borate

In the similar apparatus to that used in Example 1, 0.5g of 1,2,4,1',2',4'-hexamethyl ferrocene was added to 10g of conc. sulfuric acid. The resulting solution was stirred at room temperature for 16 hours, and then 100ml of pure

water was added thereto. The flask containing the solution was cooled, and the solution was filtered with PTFE filter paper. The filtrate was heated to 60°C by water bath with stirring, and ethanol solution (7ml) containing 1.71g of tetrakis [3,5-bis(trifluoromethyl)phenyl] borate sodium salt was added. Blue-green colored crystal precipitated.

The precipitate was filtered, washed with pure water, dried by evaporator, washed with toluene, and dried again by evaporator.

1.08g of 1,2,4,1',2',4'-hexamethyl ferrocenium/tetrakis[3,5-bis(trifluoromethyl)phenyl] borate was obtained (yield 51.5%).

The identification was carried out by $^1$H-NMR analysis similarly to the Example 2, and the following data was obtained.
$^1$HNMR [25°C, deuterated acetone, chemical shift of peak(ppm)]: 17.1 (methyl); 7.58, 7.50 (phenyl)

Example 10

Synthesis of dimethyl ferrocenium/tetrakis(pentafluorophenyl) borate

In the similar apparatus to that used in Example 1, 0.5g of dimethyl ferrocene was added to 10g of conc. sulfuric acid. The resulting solution was stirred at room temperature for 5 hours, and then 100ml of pure water was added thereto. The flask containing the solution was cooled, and the solution was filtered with PTFE filter paper. The filtrate was heated to 40°C by water bath with stirring, and ethanol solution (7ml) containing 1.6g of tetrakis(pentafluorophenyl) borate sodium salt (CAS 2797-28-6) was added. Blue colored crystal precipitated.

The precipitate was filtered, washed with pure water, dried by evaporator, washed with toluene, and dried again by evaporator.

0.97g of dimethyl ferrocenium/tetrakis(pentafluorophenyl) borate was obtained (yield 46.5%).

The identification was carried out by $^1$H-NMR analysis similarly to the Example 2, and the following data was obtained.
$^1$HNMR [25°C, deuterated acetone, chemical shift of peak(ppm)]: 34.0 (methyl); 7.10, 7.02 (phenyl)

Example 11

Synthesis of 1,2,4,1',2',4'-hexamethyl ferrocenium/tetrakis(pentafluorophenyl) borate

In the similar apparatus to that used in Example 1, 0.5g of 1,2,4,1',2',4'-hexamethyl ferrocene was added to 10g of conc. sulfuric acid. The resulting solution was stirred at room temperature for 16 hours, and then 100ml of pure water was added thereto. The flask containing the solution was cooled, and the solution was filtered with PTFE filter paper. The filtrate was heated to 60°C by water bath with stirring, and ethanol solution (7ml) containing 1.27g of tetrakis (pentafluorophenyl) borate sodium salt was added. Blue-green colored crystal precipitated.

The precipitate was filtered, washed with pure water, dried by evaporator, washed with toluene, and dried again by evaporator.

1.05g of 1,2,4,1',2',4'-hexamethyl ferrocenium/tetrakis(pentafluorophenyl) borate was obtained (yield 60%).

The identification was carried out by $^1$H-NMR analysis similarly to the Example 2, and the following data was obtained.
$^1$HNMR [25°C, deuterated acetone, chemical shift of peak(ppm)]: 34.0 (methyl)

Example 12

Synthesis of 1,2,4,1',2',4'-hexamethyl ferrocenium/tetrakis[4-(trifluoromethyl)phenyl] borate

In the similar apparatus to that used in Example 1, 0.5g of 1,2,4,1',2',4'-hexamethyl ferrocene was added to 10g of conc. sulfuric acid. The resulting solution was stirred at room temperature for 16 hours, and then 100ml of pure water was added thereto. The flask containing the solution was cooled, and the solution was filtered with PTFE filter paper. The filtrate was heated to 60°C by water bath with stirring, and ethanol solution (5ml) containing 1.14g of tetrakis [4-(trifluoromethyl)phenyl] borate sodium salt was added. Blue-green colored crystal precipitated.

The precipitate was filtered, washed with pure water, dried by evaporator, washed with toluene, and dried again by evaporator.

0.71g of 1,2,4,1',2',4'-hexamethyl ferrocenium/tetrakis[4-(trifluoromethyl)phenyl] borate was obtained (yield 44.7%).

Example 13

Synthesis of (2-ferrocenylethyl) ferrocenium/tetrakis[3,5-bis(trifluoromethyl)phenyl] borate

In the similar apparatus to that used in Example 1, 1g of commercially available 1,2-diferrocenyl ethane (CAS 12156-05-7) was added to 15g of conc. sulfuric acid. The resulting solution was stirred at room temperature for 16 hours, and then 100ml of pure water was added thereto. The flask containing the solution was cooled, and the solution was filtered with PTFE filter paper. The filtrate was heated to 70°C by water bath with stirring, and 4.86g of tetrakis [3,5-bis(trifluoromethyl)phenyl] borate sodium salt was added. Blue-green colored crystal precipitated. After the flask was left still for 1 hour under stirring, the precipitate was filtered, washed with pure water, dried by evaporator, washed with toluene, and dried again by evaporator. 3.16g of (2-ferrocenylethyl) ferrocenium/tetrakis[3,5-bis(trifluoromethyl) phenyl] borate was obtained (yield 59.2%).

The identification was carried out by $^{1}$H-NMR analysis similarly to the Example 2, and the following data was obtained.

$^{1}$HNMR [25°C, deuterated acetone, chemical shift of peak(ppm)]: 16.6 (methylene); 7.57, 7.43 (phenyl)

In order to verify the fact that the crystalline ion-association substances prepared in the above-mentioned Examples 1-13 can act as a polymerization initiator which has an ability to polymerize cationically polymerizable organic substances by means of U.V. light irradiation, heating, or U.V. light irradiation plus heating to produce polymer with high molecular weight (hardened product), some experiments were conducted. The detail of the experiments will be disclosed in the following Examples.

In the examples, a reaction system comprising organosiloxane (cationically polymerizable organic substance) and polymerization initiator was prepared by the following method; To a clear glass bottle with threaded mouth (capacity: 10ml), a polymerization initiator comprising the crystalline ion-association substance prepared in the Examples 1-13 is fed in the amount of 2 weight parts with respect to 100 weight parts of organosiloxane. After 10-50 weight parts of dichloromethane is further added thereto as medium for dispersing the initiator, the resulting mixture is stirred to disperse fully the initiator in the reaction system.

In case of using an organosiloxane compound having low volatility among organoxiloxanes, a test sample was prepared as follows: The solution prepared in accordance with the above-mentioned procedure is fed to a center recess in a hole slide glass of one hole type without overflowing the solution from the recess. The hole slide glass is put into a hot air circulating oven and maintained at 60°C for 10 min. and then at 80°C for 3 min. Finally the temperature of the test sample is put back to room temperature.

On the other hand, in case of using an organosiloxane compound having volatility and subliming property, a test sample was prepared as follpws: In the similar bottle to that described above, 10 weight parts of dichloroemethane is added with respect to 100 weight parts of the organosiloxane compound, and then the predetermined amount of polymerization initiator is added thereto. The resulting liquid mixture is stirred to disperse the initiator. Thereafter, the liquid mixture enclosed in the bottle is irradiated repeatedly with U.V. light (6000mJ/cm$^2$) four times from outer of the bottle. The obtained test sample (rubber-like hardened product produced in the bottle) is taken out and transferred to a glass cylinder for Soxhlet extraction test (glass filter with filter plate No. GP-100) to measure gel fraction.

The irradiation operation is carried out by using U.V. light from a metal halide lamp provided with a cold mirror. The exposure amount is determined as integrating luminous energy of light having the wavelength of 365nm.

The heating operation is carried out by maintaining the flask containing the reaction system under the atmosphere whose temperature is previously set up at the predetermined point (160°C or 180°C) in a thermostat.

The gel fraction is determined by putting the hardened product which is produced on the slide glass plate or in the glass bottle into Soxhlet extractor; extracting ingredient with low molecular weight from the hardened product for 16 hours; taking out the hardened product; drying the hardened product at 80°C in a hot air circulation oven for 1 hour; and measuring the weight of un-extracted ingredient of the hardened product.

The stirring and mixing operation of organosiloxane compound, polymerization initiator and solvent is carried out at room temperature by a hand homogenizer with 5mm of generator diameter, a small shaker, or the like.

Examples 14-26

To 100 weight parts of 1,3,5,7-tetramethylcyclotetrasiloxane (Gelest Inc., USA; SIT 7530.0; CAS 2370-88-9), 2 weight parts of each polymerization initiator which comprises the crystalline ion-association substance prepared in the Example 1-13 and 50 weight parts of dichloromethane were added. The obtained mixture was stirred and mixed to prepare solution in which the organosiloxane compound and the polymerization initiator were homogeneously dissolved in the solvent. The obtained solution was fed to the center recess of the hole slide glass of one hole type without overflowing the solution from the recess. The hole slide glass was put into hot air circulating oven and maintained at 60°C for 10 min. and then at 80°C for 3 min. Each test film was irradiated with U.V. light (8000mJ/cm$^2$).

The gel fraction of the hardened film was reported in Table 1.

Table 1

| Example No. | Initiator | Gel fraction of hardened film (%) |
|---|---|---|
| 14 | Example 1 | 76.2 |
| 15 | Example 2 | 68.4 |
| 16 | Example 3 | 35.6 |
| 17 | Example 4 | 61.0 |
| 18 | Example 5 | 28.9 |
| 19 | Example 6 | 79.3 |
| 20 | Example 7 | 49.0 |
| 21 | Example 8 | 77.5 |
| 22 | Example 9 | 38.8 |
| 23 | Example 10 | 89.3 |
| 24 | Example 11 | 53.5 |
| 25 | Example 12 | 40.6 |
| 26 | Example 13 | 77.2 |

Examples 27-30

In a clear glass bottle with threaded mouth, 2 weight parts of each polymerization initiator which comprises the crystalline ion-association substance prepared in the Example 8, 9, 10 or 11, 4 weight parts of benzophenone (CAS 119-61-9)(sensitizer) and 30 weight parts of dichloromethane were added to 100 weight parts of hexamethylcyclotetrasiloxane (D3)(Gelest Inc.; SIH 6105.0; CAS 541-05-9). The obtained mixture was stirred and mixed to prepare reaction system through which the polymerization initiator was homogeneously dispersed. The reaction system kept within the bottle was irradiated directly with U.V. light (6000mJ/$cm^2$) four times. The rubber-like hardened product produced in the bottle was taken out and transferred to the glass cylinder for Soxhlet extraction to measure gel fraction.
The gel fraction of the hardened product was reported in Table 2.

Table 2

| Example No. | Initiator | Gel fraction of hardened product (%) |
|---|---|---|
| 27 | Example 8 | 60.8 |
| 28 | Example 9 | 43.5 |
| 29 | Example 10 | 77.8 |
| 30 | Example 11 | 51.4 |

Example 31

In a clear glass bottle with threaded mouth, 2 weight parts of the polymerization initiator which comprises the crystalline ion-association substance prepared in the Example 10, 4 weight parts of benzophenone (sensitizer) and 30 weight parts of dichloromethane were added to 100 weight parts of octamethylcyclotetrasiloxane (D4)(Gelest Inc.; SIO 6700.0; CAS 556-67-2). The obtained mixture was stirred and mixed to prepare reaction system through which the polymerization initiator was homogeneously dispersed. The reaction system kept within the bottle was irradiated directly with U.V. light (6000mJ/$cm^2$) four times. The rubber-like hardened product produced in the bottle was taken out and transferred to the glass cylinder for Soxhlet extraction to measure the gel fraction.
The hardened product showed the gel fraction of 69.3%.

Example 32

To 100 weight parts of decamethylcyclopentasiloxane (D5)(Shin-Etsu Chemical Co., Ltd.; LS 9000; CAS 541-02-6), 2 weight parts of polymerization initiator which comprises the crystalline ion-association substance prepared in the Example 10, 4 weight parts of benzophenone (sensitizer) and 50 weight parts of dichloromethane were added. The obtained mixture was stirred and mixed to prepare solution in which the organosiloxane compound and the polymerization initiator were homogeneously dissolved in the solvent. The obtained solution was fed to the center recess

of the hole slide glass of one hole type without overflowing the solution from the recess. The hole slide glass was put into a hot air circulating oven and maintained at 60°C for 10 min. and then at 80°C for 3 min. The test film was irradiated with U.V. light (8000mJ/cm$^2$).

The hardened film showed the gel fraction of 70.7%.

Example 33

To 100 weight parts of dodecamethylcyclohexasiloxane (D6)(Shin-Etsu Chemical Co., Ltd.; LS 9060; CAS 540-97-6), 2 weight parts of polymerization initiator which comprises the crystalline ion-association substance prepared in the Example 10, 4 weight parts of benzophenone (sensitizer) and 50 weight parts of dichloromethane were added. The obtained mixture was stirred and mixed to prepare solution in which the organosiloxane compound and the polymerization initiator were homogeneously dissolved in the solvent. The obtained solution was fed to the center recess of the hole slide glass of one hole type without overflowing the solution from the recess. The hole slide glass was put into a hot air circulating oven and maintained at 60°C for 10 min. and then at 80°C for 3 min. The test film was irradiated with U.V. light (8000mJ/cm$^2$).

The hardened film showed the gel fraction of 52.4%.

Examples 34-36

To 100 weight parts of 2,2,5,5-tetramethyl-2,5-disilano-1-oxacyclopentane (Gelest Inc.; SIT 7540.0; CAS 7418-20-4), 2 weight parts of each polymerization initiator which comprises the crystalline ion-association substance prepared in the Example 8, 10 or 11, 4 weight parts of benzophenone (sensitizer) and 50 weight parts of dichloromethane were added. The obtained mixture was stirred and mixed to prepare solution in which the organosiloxane compound, the sensitizer and the polymerization initiator were homogeneously dissolved in the solvent. The obtained solution was fed to the center recess of the hole slide glass of one hole type without overflowing the solution from the recess. The hole slide glass was put into a hot air circulating oven and maintained at 60°C for 10 min. and then at 80°C for 3 min. Each test film was irradiated with U.V. light (8000mJ/cm$^2$).

The gel fraction of the hardened film was reported in Table 3.

Table 3

| Example No. | Initiator | Gel fraction of hardened film (%) |
|---|---|---|
| 34 | Example 8 | 36.3 |
| 35 | Example 10 | 72.4 |
| 36 | Example 11 | 35.2 |

Example 37

To 100 weight parts of hexaethylcyclotrisiloxane (Gelest Inc.; SIH 5990.0; CAS 2031-79-0), 2 weight parts of polymerization initiator which comprises the crystalline ion-association substance prepared in the Example 10, 4 weight parts of benzophenone (sensitizer) and 50 weight parts of dichloromethane were added. The obtained mixture was stirred and mixed to prepare solution in which the organosiloxane compound, the sensitizer and the polymerization initiator were homogeneously dissolved in the solvent. The obtained solution was fed to the center recess of the hole slide glass of one hole type without overflowing the solution from the recess. The hole slide glass was put into a hot air circulating oven and maintained at 60°C for 10 min. and then at 80°C for 3 min. The test film was irradiated with U. V. light (8000mJ/cm$^2$).

The hardened film showed the gel fraction of 40.2%.

Example 38

To 100 weight parts of phenylhydrocyclosiloxane (Gelest Inc., SIP 6736.5), 2 weight parts of polymerization initiator which comprises the crystalline ion-association substance prepared in the Example 10, 4 weight parts of benzophenone (sensitizer) and 50 weight parts of dichloromethane were added. The obtained mixture was stirred and mixed to prepare solution in which the organosiloxane compound, the sensitizer and the polymerization initiator were homogeneously dissolved in the solvent. The obtained solution was fed to the center recess of the hole slide glass of one hole type without overflowing the solution from the recess. The hole slide glass was put into a hot air circulating oven and maintained at 60°C for 10 min. The test film was irradiated with U.V. light (8000mJ/cm$^2$).

The hardened film showed the gel fraction of 65.8%.

In order to verify the fact that the polymerization initiator which comprises the crystalline ion-association substance prepared in the Example 8 or 10 is effective in photopolymerization plus thermal polymerization of organosiloxane compound (cyclic siloxane), some hardening tests will be disclosed in the following Examples 39-46.

Examples 39-42

To 100 weight parts of decamethylcyclopentasiloxane (D5) or dodecamethylcyclohexasiloxiane (D6), 2 weight parts of each polymerization initiator which comprises the crystalline ion-association substance prepared in the Example 8 or 10, 4 weight parts of benzophenone (sensitizer) and 30 weight parts of dichloromethane were added. The obtained mixture was stirred and mixed to prepare solution in which the organosiloxane compound, the sensitizer and the polymerization initiator were homogeneously dissolved in the solvent. The obtained solution was fed to the center recess of the hole slide glass of one hole type without overflowing the solution from the recess. The hole slide glass was put into a hot air circulating oven and maintained at 60°C for 10 min. The test film was cooled to room temperature and irradiated with U.V. light (6000mJ/$cm^2$). The gel fraction of the hardened films was reported in the following Table 4.

Then, the test film irradiated with U.V. light (6000mJ/$cm^2$) as mentioned above was subjected to thermal treatment by maintaining the film under atmosphere whose temperature was pre-set at 160°C for 1 hour. The gel fraction of the obtained test films was reported in the following Table 5.

Table 4

| Example No. | Cyclic siloxane | Initiator | Gel fraction of hardened film (%) |
|---|---|---|---|
| 39 | D5 | Example 8 | 53.2 |
| 40 | D6 | Example 8 | 38.4 |
| 41 | D5 | Example 10 | 59.6 |
| 42 | D6 | Example 10 | 43.4 |

Table 5

| Example No. | Gel fraction (%) |
|---|---|
| 39 | 79.4 |
| 40 | 82.3 |
| 41 | 91.2 |
| 42 | 89.5 |

In order to verify the fact that the polymerization initiator of the present invention is effective also in polymerization of the so-called modified silicone compound, said silicone compound having siloxane group in its main chain and cationically polymerizable functional group at terminal (or in its side chain), some hardening tests will be disclosed in the following Examples 43-50.

Examples 43-50

To 100 weight parts of 1,3-bis(glycidoxypropyl)tetramethyldisiloxane (silicone-modified epoxy monomer)(Gelest Inc.; SIH 1115.0; CAS 126-80-7), 1 weight part of each polymerization initiator which comprises the crystalline ion-association substance prepared in the Example 2, 3, 8, 9, 10, 11, 12 or 13, 2 weight parts of benzophenone (sensitizer) and 50 weight parts of dichloromethane were added. The obtained mixture was stirred and mixed to prepare solution in which the silicone-modified epoxy compound, the sensitizer and the polymerization initiator were homogeneously dissolved in the solvent. The obtained solution was fed to the center recess of the hole slide glass of one hole type without overflowing the solution from the recess. The hole slide glass was put into a hot air circulating oven and maintained at 60°C for 10 min. and then at 80°C for 3 mine. Each test film was irradiated with U.V. light (8000mJ/$cm^2$).

The gel fraction of the hardened films was reported in the Table 6.

Table 6

| Example No. | Initiator | Gel fraction of hardened film (%) |
|---|---|---|
| 43 | Example 2 | 70.6 |

Table 6 (continued)

| Example No. | Initiator | Gel fraction of hardened film (%) |
|---|---|---|
| 44 | Example 3 | 57.6 |
| 45 | Example 8 | 84.4 |
| 46 | Example 9 | 73.5 |
| 47 | Example 10 | 77.9 |
| 48 | Example 11 | 75.2 |
| 49 | Example 12 | 48.3 |
| 50 | Example 13 | 85.0 |

In order to verify the fact that the polymerization initiator which comprises the crystalline ion-association substance prepared in the above-mentioned Example 3, 9, 11 or 12 has an ability to carry out the hardening by three means; U.V. light irradiation, U.V. light irradiation plus heating and heating only, some hardening tests were disclosed in the following Examples 51-85.

In the hardening tests, an epoxy compound was used which is a typical cationically polymerizable organic substance.

Example 51-62

These examples relate to hardening by means of U.V. light irradiation.

Epoxy compound selected from among phenol-novolak type epoxy compound [epoxy equivalence of 170-190; DAINIPPON INK & CHEMICALS, Inc. ; EPICRON (registered trademark) N-730A], bisphenol F type epoxy compound [epoxy equivalence of 165-185; DAINIPPON INK & CHEMICALS, Inc.; EPICRON (registered trademark) 830] and hydrogenated bisphenol A type epoxy compound [epoxy equivalence of 215; Petrochemical Shell Epoxy Co., Ltd.; EPICOAT (registered trademark) RXE 21] was dissolved in methyl ethyl ketone in such amount that the solution has the solid content of 50%. To the obtained solution, the polymerization initiator which comprises the crystalline ion-association substance prepared in the Example 3, 9, 11 or 12 was added in the amount of 1 weight part in case that the polymerization initiator comprises the crystalline ion-association substance prepared in the Example 3 or 12, or of 0.7 weight part in case of the polymerization initiator which comprises the crystalline ion-association substance prepared in the Example 9 or 11, with respect to 100 weight parts of the epoxy compound. Two weight parts of dibenzosuberone (sensitizer) (CAS 1210-35-1) was also added thereto. Then, the obtained mixture was stirred and mixed to prepare solution in which the epoxy compound, the sensitizer and the polymerization initiator were homogeneously dissolved in the solvent. The solution was applied to surface of glass plate at the uniform thickness (as dry film) of 200μm. The glass plate was put into a 60°C hot air circulating oven for 20 min. to remove the solvent. Finally, the film was dried by maintaining in the hot air circulating oven at 80°C for another 10 min. The obtained film was used as a test piece.

The irradiation operation was carried out by using U.V. light generated by a metal halide lamp provided with a cold mirror. The exposure amount was determined as integrating luminous energy of light having the wavelength of 365nm.

In order to determine the degree of hardening, the gel fraction of the film was measured. In the measurement of gel fraction, the test piece of hardened epoxy resin film which was obtained by hardening the epoxy compound on the glass plate was put into Soxhlet extractor. The extraction was carried out for 16 hours by using acetone as solvent to remove ingredient with low molecular weight. Then, the test piece was taken out from the extractor, put into a 80°C hot air circulating oven, and dried by maintaining in the oven for 1 hour. Thereafter, the weight of un-extracted ingredient of the test piece was measured.

Each test piece was irradiated with U.V. light at the exposure amount of 8000mJ/cm$^2$.

The gel fraction of the hardened film was reported in Table 7.

Table 7

| Ex. No. | Epoxy compound | Initiator | Gel fraction(%) |
|---|---|---|---|
| 51 | phenol-novolak type | Ex. 3 | 85.3 |
| 52 | ditto | Ex. 9 | 90.1 |
| 53 | ditto | Ex.11 | 93.2 |
| 54 | ditto | Ex.12 | 79.4 |

Table 7 (continued)

| Ex. No. | Epoxy compound | Initiator | Gel fraction(%) |
|---|---|---|---|
| 55 | bisphenol F type | Ex. 3 | 83.5 |
| 56 | ditto | Ex. 9 | 89.3 |
| 57 | ditto | Ex.11 | 91.5 |
| 58 | ditto | Ex.12 | 92.8 |
| 59 | hydrogenated bisphnol A type | Ex. 3 | 83.6 |
| 60 | ditto | Ex. 9 | 91.3 |
| 61 | ditto | Ex.11 | 93.0 |
| 62 | ditto | Ex.12 | 89.7 |

Examples 63-74

These examples relate to hardening by means of U.V. light irradiation plus heating.

The test pieces prepared from epoxy compounds in accordance with the same procedure to that used in the Example 51 were irradiated with U.V. light (3000mJ/$cm^2$). The gel fraction of the irradiated test pieces were reported in the following Table 8.

Then, the test pieces irradiated with U.V. light (3000mJ/$cm^2$) as mentioned above were subjected to thermal treatment by maintaining the test pieces under atmosphere whose temperature was pre-set at 160°C for 1 hour. The gel fraction of the obtained hardened products was reported in the following Table 9.

Table 8

| Ex. No. | Epoxy compound | Initiator | Gel fraction(%) |
|---|---|---|---|
| 63 | phenol-novolak type | Ex. 3 | 62.3 |
| 64 | ditto | Ex. 9 | 69.1 |
| 65 | ditto | Ex.11 | 75.7 |
| 66 | ditto | Ex.12 | 56.2 |
| 67 | bisphenol F type | Ex. 3 | 70.3 |
| 68 | ditto | Ex. 9 | 77.9 |
| 69 | ditto | Ex.11 | 80.5 |
| 70 | ditto | Ex.12 | 79.2 |
| 71 | hydrogenated bisphnol A type | Ex. 3 | 76.7 |
| 72 | ditto | Ex. 9 | 79.2 |
| 73 | ditto | Ex.11 | 83.4 |
| 74 | ditto | Ex.12 | 81.6 |

Table 9

| Example No. | Gel fraction (%) |
|---|---|
| 63 | 92.3 |
| 64 | 95.2 |
| 65 | 94.3 |
| 66 | 91.5 |
| 67 | 94.8 |
| 68 | 96.2 |
| 69 | 93.3 |
| 70 | 94.7 |
| 71 | 94.8 |
| 72 | 96.7 |
| 73 | 91.3 |
| 74 | 90.6 |

Examples 75-86

These examples show the fact that the polymerization initiator of the present invention is effective for thermal polymerization of epoxy compound.

The test pieces prepared in accordance with the same procedure to that used in the Example 51 were subjected to thermal treatment by maintaining each test piece under atmosphere whose temperature was pre-set at 180°C for 2 hours in a thermostat, without U.V. light irradiation. The gel fraction of the obtained hardened products was reported in Table 10.

Table 10

| Ex. No. | Epoxy compound | Initiator | Gel fraction(%) |
|---|---|---|---|
| 75 | phenol-novolak type | Ex. 3 | 78.5 |
| 76 | ditto | Ex. 9 | 80.9 |
| 77 | ditto | Ex.11 | 76.3 |
| 78 | ditto | Ex.12 | 85.7 |
| 79 | bisphenol F type | Ex. 3 | 77.9 |
| 80 | ditto | Ex. 9 | 79.1 |
| 81 | ditto | Ex.11 | 78.8 |
| 82 | ditto | Ex.12 | 69.2 |
| 83 | hydrogenated bisphnol A type | Ex. 3 | 87.7 |
| 84 | ditto | Ex. 9 | 93.1 |
| 85 | ditto | Ex.11 | 91.3 |
| 86 | ditto | Ex.12 | 92.1 |

The following examples show the fact that the polymerization initiators of the present invention have an ability to carry out hardening of a mixture which comprises cationically polymerizable substances of heterogeneous type by three means; U.V. light irradiation, U.V. light irradiation plus heating and heating.

Example 87-99

<u>Hardening of mixture consisting of cyclic siloxane and hydrogenated bisphenol A epoxy resin</u>

To a mixture consisting of 50 weight parts of dodecamethylcyclohexasiloxane (D6) and 50 weight parts of hydrogenated bisphenol A epoxy compound, 1 weight parts of each polymerization initiator which comprises the crystalline ion-association substance prepared in the above-mentioned Examples 1-13 and then 2 weight parts of dibenzosuberone (sensitizer) and 20 weight parts of dichloromethane were added. The obtained mixture was stirred and mixed to prepare solution in which the polymerizable substances, the sensitizer and the polymerization initiator were homogeneously dissolved in the solvent. The solution was applied to surface of glass plate at the uniform thickness (as dry film) of 200μm. In order to remove the solvent, the obtained film was maintained in a hot air circulating oven at 60°C for 10 minutes and then at 80°C for 3 minutes. The obtained film was irradiated with U.V. light (8000mJ/cm$^2$).

The gel fraction of the hardened film is reported in Table 11.

Table 11

| Example No. | Initiator | Gel fraction of hardened film (%) |
|---|---|---|
| 87 | Example 1 | 87.4 |
| 88 | Example 2 | 81.5 |
| 89 | Example 3 | 79.3 |
| 90 | Example 4 | 88.7 |
| 91 | Example 5 | 69.4 |
| 92 | Example 6 | 77.9 |
| 93 | Example 7 | 92.8 |
| 94 | Example 8 | 89.7 |
| 95 | Example 9 | 93.5 |
| 96 | Example 10 | 91.4 |

Table 11 (continued)

| Example No. | Initiator | Gel fraction of hardened film (%) |
|---|---|---|
| 97 | Example 11 | 82.3 |
| 98 | Example 12 | 76.4 |
| 99 | Example 13 | 81.7 |

In order to verify the fact that the polymerization initiator which comprises the crystalline ion-association substance prepared in the above-mentioned Example 3, 9, 11 or 12 has an ability to proceed the polymerization (hardening) of mixture consisting of cyclic siloxane and epoxy resin by heating after U.V. light irradiation, some hardening tests were disclosed in the following Examples 100-107. The gel fraction of the obtained hardened products were reported in Tables 12 and 13.

Examples 100-107

In accordance with the same procedure to that used in the Example 87, test pieces were prepared starting from mixture consisting of dodecamethylcyclohexasiloxane (D6)(cyclic siloxane) and hydrogenated bisphenol A type epoxy compound. Each test piece was irradiated with U.V. light (2000mJ/$cm^2$). The gel fraction of the irradiated test piece was reported in the following Table 12. Then, the irradiated test piece was subjected to thermal treatment by maintaining each test piece in a hot air circulating oven whose temperature was pre-set at 160°C for 1 hour. The gel fraction of the obtained hardened product (film) was reported in the following Table 13.

Table 12

| Example No. | Initiator | Gel fraction of hardened film (%) |
|---|---|---|
| 100 | Example 3 | 38.2 |
| 101 | Example 9 | 50.1 |
| 102 | Example 11 | 55.3 |
| 103 | Example 12 | 39.2 |

Table 13

| Example No. | Initiator | Gel fraction of hardened film (%) |
|---|---|---|
| 104 | Example 3 | 82.5 |
| 105 | Example 9 | 91.3 |
| 106 | Example 11 | 90.7 |
| 107 | Example 12 | 88.1 |

Examples 108-111

These examples show the fact that the polymerization initiator which comprises the crystalline ion-association substance prepared in the above-mentioned Example 3, 9, 11 or 12 has an ability to proceed a thermal polymerization of mixture consisting of cyclic siloxane and epoxy compound.

By using the same starting materials and procedure to those used in the Example 87, test pieces were prepared. Each test piece was subjected to thermal treatment by maintaining the test piece in a hot air circulating oven whose temperature was pre-set at 180°C for 2 hours. The gel fraction of the obtained hardened product (film) was reported in Table 14.

Table 14

| Example No. | Initiator | Gel fraction of hardened film (%) |
|---|---|---|
| 108 | Example 3 | 65.7 |
| 109 | Example 9 | 85.7 |
| 110 | Example 11 | 81.4 |
| 111 | Example 12 | 73.1 |

Examples 112-135

The cationically polymerizable organic substance was irradiated with U.V. light in the presence of the polymerization initiator which comprises the crystalline ion-association substance prepared in the above-mentioned Example 3, 9, 11 or 12. The thickness of the obtained hardened film was reported in the following Table 15. Then, the hardened film obtained by U.V. light irradiation was subjected to thermal treatment. The gel fraction of the obtained hardened product was reported in the following Table 16.

The solution was prepared by dissolving each epoxy compound selected from among phenol-novolak type epoxy compound, bisphenol F type epoxy compound and hydrogenated bisphenol A type epoxy compound in methyl ethyl ketone in such amount that the solution has the solid content of 97%. To the obtained solution, the polymerization initiator was added in the amount of 1 weight part in case that the polymerization initiator comprises the crystalline ion-association substance prepared in the Example 3 or 12, and of 0.7 weight part in case that the polymerization initiator comprises the crystalline ion-association substance prepared in the Example 9 or 11, with respect to 100 weight parts of the epoxy compound. Two weight parts of dibenzosuberone (sensitizer) was also added thereto. Then, the obtained mixture was stirred and mixed to prepare solution in which the epoxy compound, the sensitizer and the polymerization initiator were homogeneously dissolved in the solvent. The solution was fed to a brown colored cylindrical glass vessel having the inner diameter of 5mmÖ and the length of 20mm to the depth of 10mm from bottom to prepare test sample. The test sample contained in the glass vessel was irradiated with U.V. light from upper liquid surface ($8000mJ/cm^2$). The obtained hardened product was taken out by destroying the vessel, and the thickness of the hardened product was measured with a thickness gauge. The results were reported in the following Table 15.

The test sample contained in the vessel, which was prepared by using the same procedure as mentioned above, was irradiated with U.V. light ($8000mJ/cm^2$). Then, the irradiated test sample was subjected to thermal treatment by maintaining the sample in a thermostat whose temperature was preset at 160°C for 1 hour. The obtained hardened product (5mmÖ × 10mm) was taken out from the vessel. The gel fraction of the hardened product was reported in the following Table 16.

Table 15

| Ex. No. | Epoxy compound | Initiator | Thickness (mm) |
|---|---|---|---|
| 112 | phenol-novolak type | Ex. 3 | 0.98 |
| 113 | ditto | Ex. 9 | 1.09 |
| 114 | ditto | Ex.11 | 1.73 |
| 115 | ditto | Ex.12 | 1.25 |
| 116 | bisphenol F type | Ex. 3 | 1.25 |
| 117 | ditto | Ex. 9 | 1.51 |
| 118 | ditto | Ex.11 | 2.31 |
| 119 | ditto | Ex.12 | 1.18 |
| 120 | hydrogenated bisphnol A type | Ex. 3 | 1.35 |
| 121 | ditto | Ex. 9 | 2.02 |
| 122 | ditto | Ex.11 | 2.43 |
| 123 | ditto | Ex.12 | 1.91 |

Table 16

| Ex. No. | Epoxy compound | Initiator | Gel fraction(%) |
|---|---|---|---|
| 124 | phenol-novolak type | Ex. 3 | 96.2 |
| 125 | ditto | Ex. 9 | 97.9 |
| 126 | ditto | Ex.11 | 98.1 |
| 127 | ditto | Ex.12 | 98.3 |
| 128 | bisphenol F type | Ex. 3 | 95.4 |
| 129 | ditto | Ex. 9 | 97.8 |
| 130 | ditto | Ex.11 | 97.9 |
| 131 | ditto | Ex.12 | 96.5 |
| 132 | hydrogenated bisphnol A type | Ex. 3 | 96.9 |
| 133 | ditto | Ex. 9 | 98.4 |

Table 16 (continued)

| Ex. No. | Epoxy compound | Initiator | Gel fraction(%) |
|---|---|---|---|
| 134 | ditto | Ex.11 | 98.9 |
| 135 | ditto | Ex.12 | 97.1 |

Industrial Applicability

The polymerization initiator of the present invention have such a unique property that it can initiate both photopolymerization and thermal polymerization when used in polymerizing cationically polymerizable organic substance, though the polymerization initiator comprises an identical crystalline ion-association substance.

In particular, since the photopolymerization initiator for organosiloxane has not almost been developed, the polymerization initiator of the present invention is valuable.

For the above-mentioned unique property of the polymerization initiator of the present invention, it is possible to obtain a merit in practical use; that is, after the U.V. light irradiation, it is possible to carry out the hardening in shade zone which is not exposed to U.V. light or a deep zone to which U.V. light dose not reach by means of heating (photopolymerization plus thermal polymerization). This merit is very important, because, in accordance with conventional method, when the hardening is carried out by using both means of photopolymerization and thermal polymerization in accordance with conventional method, it is necessary to modify a monomer itself; for example, to prepare a modified organosiloxane having epoxy group.

Since the polymerization initiator of the present invention is effective equally to a plurality of cationically polymerizable organic substances (such as epoxy compounds, organosiloxane compounds, etc.), it can display its function to various mixtures consisting of a plurality of compounds having reactive groups of different type.

Therefore, it is possible to spread field and method for use of cationically polymerizable organic substances by using the polymerization initiator of the present invention.

**Claims**

1. A polymerization initiator for cationically polymerizable organic substance, said cationically polymerizable organic substance being a compound or mixture of at least two compounds selected from among methylol compounds, ethylenic compounds, polyacetal compounds, organosiloxane compounds, polyamide compounds and heterocyclic compounds, said initiator being **characterised in that** it comprises a crystalline ion-association substance having a general formula (I):

$$[\{C_5(R^1)_n\}_{2m}M_m]^{L+}[\{B(R^2)_4\}^-]_L.$$

wherein M is Fe; $C_5$ is a cyclopentadienyl group; $R^1$ is an alkyl group, an organoboranyl group or an alkylene group; n is a number within the range of 0 to 3, m is either 1 or 2, L is either 1 or 2; $R^2$ is halogenated aryl group, halogen haloform aryl group, and the four $R^2$(s) are the same to each other.

2. The polymerization initiator according to claim 1, **characterised in that** said cationically polymerizable organic substance is selected from among organosiloxane compounds, epoxy compounds and mixture thereof.

3. The polymerization initiator claimed in the claim 1, wherein the metallocene derivative cation having mono-nucleus structure or di-nucleus structure which constitutes the crystalline ion-association substance having the general formula (I) is selected from a group consisting of tert.-amyl ferrocenium, n-butyl ferrocenium, 1,1'-di-n-butyl ferrocenium, 1,1'-dimethyl ferrocenium, ethyl ferrocenium, (dihydroxyboranyl) ferrocenium, ferrocenium, t-butyl ferrocenium, diferrocenium derivative cation, 1,2,4,1',2',4'-hexamethyl ferrocenium cation, tetramethyl ferrocenium cation and hexamethyl ferrocenium cation.

4. The polymerization initiator claimed in the claim 1, wherein said tetranentate borate complex anion which constitutes the crystalline ion-association substance having the general formula (I) is selected from a group consisting of tetrakis(4-fluorophenyl) borate anion, tetrakis(4-fluorobiphenyl) borate anion, tetrakis[3,5-bis(trifluoromethyl) phenyl] borate anion, tetrakis(3,5-difluorophenyl) borate anion, tetrakis[4-(trifluoromethyl)phenyl] borate anion, tetrakis(2,3,5,6-tetrafluorophenyl) borate anion, tetrakis(1,2,3,4,5-pentafluorophenyl) borate anion, tetrakis(3,4,5-trifluorophenyl) borate anion, tetrakis[3,5-bis(1,1,1,3,3,3-hexafluoro-2-methoxy-2-propyl)phenyl] borate anion, tetrakis(2,4,6-trifluorophenyl) borate anion, tetrakis(3,5-dichlorophenyl) borate anion and tetrakis(4-chlorophenyl) borate anion.

## Patentansprüche

1. Polymerisationsinitiator für eine kationisch polymerisierbare organische Substanz, wobei die kationisch polymerisierbare Substanz eine Verbindung oder eine Mischung von mindestens zwei Verbindungen ist, ausgewählt aus Methylol-Verbindungen, ethylenischen Verbindungen, Polyacetal-Verbindungen, Organosiloxan-Verbindungen, Polyamid-Verbindungen und heterocyclischen Verbindungen, wobei der Initiator **dadurch gekennzeichnet ist, dass** er eine kristalline Ionenassoziationsverbindung der allgemeinen Formel (I):

$$[\{C_5(R^1)_n\}_{2m}M_m]^{L+}[\{B(R^2)_4\}^-]_L$$

worin M für Fe steht; worin $C_5$ eine Cyclopentadienyl-Gruppe ist; worin $R^1$ eine Alkyl-Gruppe, eine Organoboranyl-Gruppe oder eine Alkylen-Gruppe ist; worin n eine Zahl in einem Bereich von 0 bis 3 bedeutet, wobei m entweder 1 oder 2 ist, wobei L entweder 1 oder 2 ist; worin $R^2$ eine halogenierte Aryl-Gruppe, eine Halogen-Haloform-Arylgruppe ist und wobei die vier $R^2$ identisch miteinander sind, umfasst.

2. Polymerisationsinitiator nach Anspruch 1, **dadurch gekennzeichnet, dass** die kationisch polymerisierbare organische Substanz ausgewählt ist aus Organosiloxan-Verbindungen, Epoxy-Verbindungen und Mischungen hiervon.

3. Polymerisationsinitiator nach Anspruch 1, wobei das Metallocenderivatkation mit Einkern-Struktur oder Zweikern-Struktur, welches die kristalline Ionenassoziationsverbindung der allgemeinen Formel (I) bildet, ausgewählt ist aus einer Gruppe, welche aus tert-Amylferrocenium, n-Butylferrocenium, 1,1'-Di-n-butylferrocenium, 1,1'-Dimethylferrocenium, Ethylferrocenium, (Dihydroxyboranyl)-ferrocenium, Ferrocenium, t-Butylferrocenium, Diferroceniumderivatkation, 1,2,4,1',2',4'-Hexamethylferroceniumkation, Tetramethylferroceniumkation und Hexamethylferroceniumkation besteht.

4. Polymerisationsinitiator nach Anspruch 1, wobei das vierzähnige Boratkomplexanion, welches die kristalline Ionenassoziationssubstanz der allgemeinen Formel (I) bildet, ausgewählt ist aus einer Gruppe, welche aus Tetrakis-(4-fluorophenyl)-boratanion, Tetrakis-(4-fluorobiphenyl)-boratanion, Tetrakis-[3,5-bis-(trifluoromethyl)-phenyl]-boratanion, Tetrakis-(3,5-difluorophenyl)-boratanion, Tetrakis-[4-(trifluoromethyl)-phenyl]-boratanion, Tetrakis-(2,3,5,6-tetrafluorophenyl)-boratanion, Tetrakis-(1,2,3,4,5-pentafluorophenyl)-boratanion, Tetrakis-(3,4,5-trifluorophenyl)-boratanion, Tetrakis-[3,5-bis-(1,1,1,3,3,3-hexafluoro-2-methoxy-2-propyl)-phenyl]-boratanion, Tetrakis-(2,4,6-trifluorophenyl)-boratanion, Tetrakis-(3,5-dichlorophenyl)-boratanion und Tetrakis-(4-chlorophenyl)-boratanion besteht.

## Revendications

1. Amorceur de polymérisation pour substance organique polymérisable par polymérisation cationique, qui est un composé ou un mélange d'au moins deux composés, ledit composé ou lesdits composés étant choisis parmi les composés méthylol, les composés éthyléniques, les polyacétals, les organosiloxanes, les polyamides et les composés hétérocycliques, amorceur **caractérisé en ce qu'**il comprend une substance cristalline à ions associés, de formule générale (I) :

$$\left[\left\{C_5(R^1)_n\right\}_{2m}M_m\right]^{L+}\left[\left\{B(R^2)_4\right\}^-\right]_L.$$

dans laquelle M représente Fe, $C_5$ représente un groupe cyclopentadiényle, $R^1$ représente un groupe alkyle, un groupe organoboranyle ou un groupe alkylène, n désigne un nombre de 0 à 3, m est égal à 1 ou 2, L est égal à 1 ou 2, $R^2$ représente un groupe aryle halogéné ou un groupe aryle à substituant halogénoforme, et les quatre groupes $R^2$ sont identiques.

2. Amorceur de polymérisation selon la revendication 1, **caractérisé en ce que** ladite substance organique polymérisable par polymérisation cationique est choisie parmi les organosiloxanes, les composés époxy et leurs mélanges.

3. Amorceur de polymérisation selon la revendication 1, dont le cation métallocène à structure mononucléaire ou dinucléaire de la substance cristalline à ions associés de formule générale (I) est choisi parmi le cation tert.-amyl ferrocénium, le cation n-butyl ferrocénium, le cation 1,1'-di-n-butyl ferrocénium, le cation 1,1'-diméthyl ferrocénium, le cation éthyl ferrocénium, le cation (dihydroxyboranyl) ferrocénium, le cation ferrocénium, le cation t-butyl ferrocénium, les cations du type diferrocénium, le cation 1,2,4,1',2',4'-hexaméthyl ferrocénium, le cation tétraméthyl ferrocénium et le cation hexaméthyl ferrocénium.

4. Amorceur de polymérisation selon la revendication 1, dont ledit anion complexe borate tétradenté de la substance cristalline à ions associés de formule générale (I) est choisi parmi l'anion tétrakis(4-fluorophényl)borate, l'anion tétrakis(4-fluorobiphényl) borate, l'anion tétrakis[3,5-bis(trifluorométhyl)phényl] borate, l'anion tétrakis(3,5-difluorophényl) borate, l'anion tétrakis[4-(trifluorométhyl)phényl] borate, l'anion tétrakis(2,3,5,6-tetrafluorophényl) borate, l'anion tétrakis(1,2,3,4,5-pentafluorophényl) borate, l'anion tétrakis(3,4,5-trifluorophényl) borate, l'anion tétrakis [3,5-bis(1,1,1,3,3,3-hexafluoro-2-méthoxy-2-propyl)phényl] borate, l'anion tétrakis(2,4,6-trifluorophényl) borate, l'anion tétrakis(3,5-dichlorophényl) borate et l'anion tétrakis(4-chlorophényl) borate.